## Europäisches Patentamt

## European Patent Office

## Office européen des brevets

(19)

(11) Veröffentlichungsnummer : **0 192 174**
**B1**

(12)

# EUROPÄISCHE PATENTSCHRIFT

(45) Veröffentlichungstag der Patentschrift :
**13.04.88**

(51) Int. Cl.⁴ : **B 25 J 18/06// B25J17/00**

(21) Anmeldenummer : **86101745.7**

(22) Anmeldetag : **12.02.86**

(54) **Manipulator.**

(30) Priorität : **22.02.85 DE 3506146**

(43) Veröffentlichungstag der Anmeldung :
**27.08.86 Patentblatt 86/35**

(45) Bekanntmachung des Hinweises auf die Patenterteilung : **13.04.88 Patentblatt 88/15**

(84) Benannte Vertragsstaaten :
**FR GB IT**

(56) Entgegenhaltungen :
**EP-A- 0 104 589**
**DE-A- 3 210 466**
**DE-A- 3 231 249**
**DE-B- 2 745 932**

(73) Patentinhaber : **Noell GmbH**
**Alfred-Nobel-Strasse 20**
**D-8700 Würzburg (DE)**

(72) Erfinder : **Krieger, Friedrich**
**Petrinistrasse 38**
**D-8700 Würzburg (DE)**

(74) Vertreter : **Kaiser, Henning**
**SALZGITTER AG Patente und Lizenzen Kurfürsten-**
**damm 32 Postfach 15 06 27**
**D-1000 Berlin 15 (DE)**

Jouve, 18, rue St-Denis, 75001 Paris, France

## Beschreibung

Die Erfindung betrifft einen Manipulator für die verschiedensten Handhabungen.

Der Erfindung liegt die Aufgabe zugrunde, einen Manipulator zu schaffen, bei dem sich mit wenig Aufwand dessen Handhabungsteil raumparallel bewegen läßt.

Die Aufgabe wird erfindungsgemäß dadurch gelöst, daß der Manipulator vier rotatorische Antriebsachsen aufweist, von denen zwei Achsen gegenüber den beiden anderen Achsen schräg angeordnet sind und jeweils die beiden schräg angeordneten Achsen und die beiden anderen Achsen in ihrem Lauf synchronisiert sind.

Zur Steigerung der raumparallelen Bewegungsmöglichkeiten ist eins der in schräger Lage rotierenden Manipulatorteile translatorisch verstellbar ausgebildet.

Die Erfindung wird anhand eines in der Zeichnung dargestellten Ausführungsbeispiels nachfolgend näher beschrieben. Die Zeichnung zeigt in :

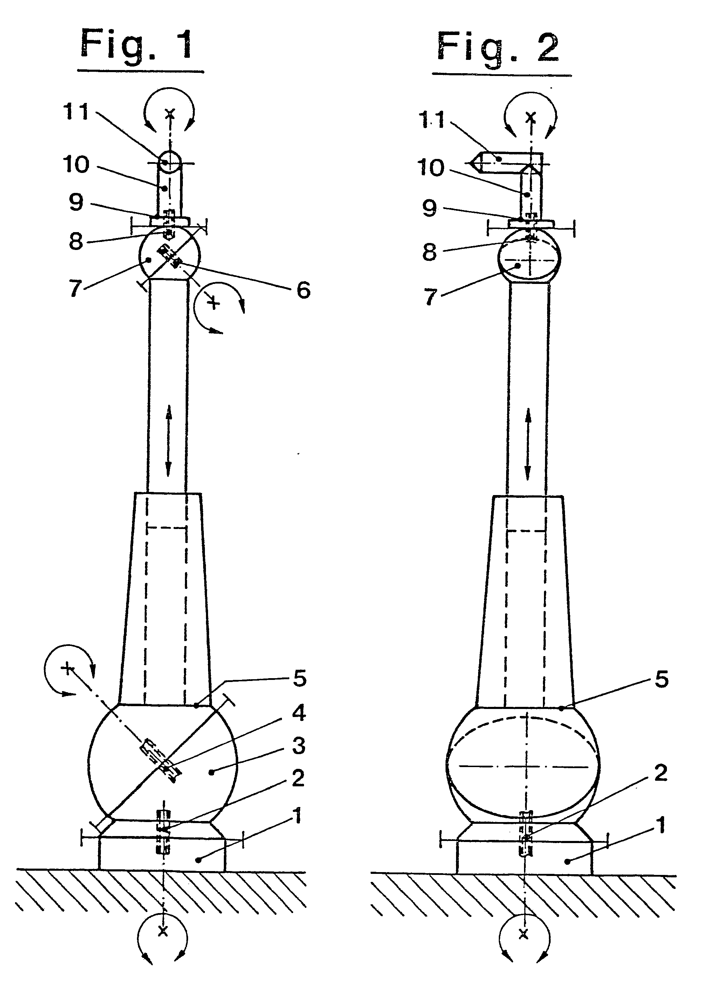

Fig. 1 einen teilweise schematisch dargestellten Manipulator in Draufsicht

Fig. 2 den Manipulator gemäß der Fig. 1 in Seitenansicht.

Mit 1 ist ein stationär angeordnetes Manipulatorteil bezeichnet. Gegenüber dem Teil 1 ist mittels einer in der Zeichnung schematisch angedeuteten rotatorischen Antriebsachse 2 ein Manipulatorteil 3 drehbar gelagert. Gegenüber dem Teil 3 ist mittels einer in der Zeichnung schematisch angedeuteten rotatorischen Antriebsachse 4 ein Manipulatorteil 5 drehbar gelagert. Das Teil 5 besteht aus zwei teleskopartig ineinanderschiebbaren und verdrehsicher zueinander ausgebildeten Teilen und ist somit translatorisch verstellbar. Gegenüber dem Teil 5 ist mittels einer in der Zeichnung schematisch angedeuteten rotatorischen Antriebsachse 6 ein Manipulatorteil 7 drehbar gelagert. Gegenüber dem Teil 7 ist mittels einer in der Zeichnung schematisch angedeuteten rotatorischen Antriebsachse 8 ein Manipulatorteil 9 drehbar gelagert. Das Teil 9 ist mit einem Ansatz 10 versehen, der zur Halterung eines Handhabungsteiles, wie z. B. eines Werkzeuges 11, dient. Die Achse des Werkzeuges 11 ist im Winkel von 90° zur Achse 8 angeordnet. Die beiden Achsen 4, 6 sind gegenüber den beiden anderen Achsen 2, 8 schräg angeordnet. Sowohl die beiden schräg angeordneten Achsen 4, 6 als auch die beiden anderen Achsen 2, 8 sind in ihrem Lauf jeweils synchronisiert.

Der erfindungsgemäße Manipulator kann sein Handhabungsteil raumparallel an jeden Punkt einer Halbkugeloberfläche und in den Raum einer Halbkugel hinein bewegen.

Die einzelnen Steuerungsmechanismen sind in der Zeichnung aus Gründen einer besseren Übersicht fortgelassen.

## Patentansprüche

1. Manipulator für die verschiedensten Handhabungen, dadurch gekennzeichnet, daß er vier rotatorische Antriebsachsen (2, 4, 6, 8) aufweist, von denen zwei Achsen gegenüber den beiden anderen Achsen schräg angeordnet sind und jeweils die beiden schräg angeordneten Achsen (4, 6) und die beiden anderen Achsen (2, 8) in ihrem Lauf synchronisiert sind.

2. Manipulator nach Anspruch 1, dadurch gekennzeichnet, daß eins der in schräger Lage rotierenden Manipulatorteile translatorisch verstellbar ausgebildet ist.

## Claims

1. Manipulator for the most varied of operations, characterised in that it has four rotary drive shafts (2, 4, 6, 8), two of which shafts are inclinedly disposed relative to the other two shafts, and the two inclinedly disposed shafts (4, 6) are always synchronised with the other two shafts (2, 8) in respect of their movement.

2. Manipulator according to claim 1, characterised in that one of the component parts of the manipulator, which rotate in an inclined manner, is adapted to be translatorily adjustable.

## Revendications

1. Manipulateur permettant de réaliser les opérations de manipulation les plus diverses, caractérisé en ce qu'il comporte quatre axes de commande rotatifs (2, 4, 6, 8), dont deux sont placés dans des positions inclinées par rapport aux deux autres axes et les deux axes en position inclinée (4, 6) ont des mouvements respectivement synchronisés sur ceux des deux autres axes (2, 8).

2. Manipulateur selon la revendication 1, caractérisé en ce que l'une des pièces tournantes et en position inclinée du manipulateur est montée déplaçable en translation.

# Fig. 1

# Fig. 2